# EUROPEAN PATENT SPECIFICATION

(11) **EP 2 089 566 B1**
(45) Date of publication and mention of the grant of the patent: **22.01.2014**
(21) Application number: 07852907.0
(22) Date of filing: 23.10.2007
(51) Int. Cl.: B26F 1/24, B29C 55/18, D06C 23/00, A61F 13/15, D04H 1/558

(54) **METHODS FOR MAKING OF APERTURED WEBS**
VERFAHREN ZUR HERSTELLUNG EINES PERFORIERTEN BAHNMATERIALS
PROCÉDÉS DE FABRICATION DE BANDES PERFORÉES

(30) Priority: 23.10.2006 US 853601 P
(43) Date of publication of application: 19.08.2009
(73) Proprietor: Cree, James W., Chesterfield, VA 23838 (US)
(72) Inventor: Cree, James W., Chesterfield, VA 23838 (US)
(74) Representative: Miller, James Lionel Woolverton
(86) International application number: PCT/US2007/022497
(87) International publication number: WO 2008/051548

(56) References cited:
- EP-A2- 0 164 740
- WO-A1-99/65673
- WO-A1-2004/007158
- DE-A1- 19 750 459
- US-A- 4 276 336
- US-A- 4 285 100
- US-B2- 7 037 569

## Description

### FIELD OF THE INVENTION

The present invention relates to apertured webs and methods for making such webs.

### BACKGROUND OF THE INVENTION

DE 19750459-A discloses an assembly for perforating a web of thermoplastic fibres in which a roller pulls a web in the machine direction to break portions of the web. WO2004/007158-A discloses a perforation means which displace fibres of a non-woven whereby the perforation means engage in a material on a roller, such that said means can displace the material when they engage. US4285100A discloses a process for bi-axially stretching a non-woven web of synthetic fibres.

Apertured webs are used in various industrial and consumer products sectors. For example, apertured webs are used to produce disposable sheets, disposable garments and hygiene and sanitary products, such as sanitary napkins, incontinence pads and baby diapers.

Apertured webs can be manufactured using various techniques. For example, one technique for forming apertured webs entails extruding a plastic sheet of film using traditional film extrusion techniques (for example, a thin sheet of LDPE delivered through a cast or blown extrusion head,) and aperturing the film using solid or molten phase forming techniques as known in the art (e.g., water perforation techniques, mechanical perforation techniques, etc.) The film may be textured as well via mechanical or water embossing, or other methods as are known in the art.

Another technique manufacturers for creating apertured webs particularly fiber based apertured webs calls for using thermo-mechanical contact perforation such as pin perforation or engraved cylinder that is in contact with a smooth cylinders as described in Patents Nos. Giacometti US 5814389; Pohland US 4128679 and Van Iten US 4886632, however thermo-mechanical contact perforation may lead to an undesirable crispiness around the perimeter of the holes, however. The web and any products produced from the web may be less than pleasingly soft, as during the perforation step the heat and pressure that was used to assist in forming the aperture may render the material stiff around the hole because it forces the fibers adjacent to the hole to become oriented in a cluster of tangled densified fibers. As a consequence the web and/or product made from the web may have a stiff or scratchy or similar, generally unpleasant, sensation.

### BRIEF DESCRIPTION OF THE DRAWINGS

FIG. 1 shows an embodiment of pin perforation system
FIG. 2 shows a view of another embodiment.

### DETAILED DESCRIPTION OF THE EMBODIMENTS

The present invention relates to methods for making apertured webs. Webs are perforated using a mechanical process such as pin perforation or a cylinder with raised protuberances. The web is then softened using a mechanical process. It should be noted that softening can occur after the perforation during assembly of product using a web.

As used herein, the term "machine direction" means the direction in which webs are formed, which is the longitudinal direction of an uncut web.

As used herein, the term "transverse direction" means the cross direction, disposed at 90° to the machine direction, and extending across the width of the initially formed precursor web.

The web is a thermoplastic sheet. Embodiments may also be subsequently finished or semi finished or treated in some manner, e.g., a nonwoven with fiber like surface.

In especially preferred embodiments, a web, comprised of a thermoplastic nonwoven, with a fiber like surface, is pin perforated and so an aperture is created. The aperture comprises a ring of molten mass of plastic surrounding a perforation.

Following perforation the web is introduced into a softening device. A fiber reorientation device called ring roll is used to soften the web. A set of adjacent rings on a roller, stretches the web in the cross direction. Hole geometry generally remains as it was when perforated. However, the area around the perforation is stressed by passing over the rings, and so the fibers planar orientation is disrupted, and caused to extend out of the plane of the web. This disruption and subsequent fiber extension out of the plane of the web renders the web softer to the touch. The basis weight of the web subsequent to the softening is decreased however by an amount less than 25%.

It may be desired in certain preferred embodiments to treat various areas of a web, or semi finished or finished products differently (referred to herein as "products,") such as when patterns or other areas are interposed through perforations. Moreover, as was described above, softening may occur to a web, to a semi finished product or to a finished product.

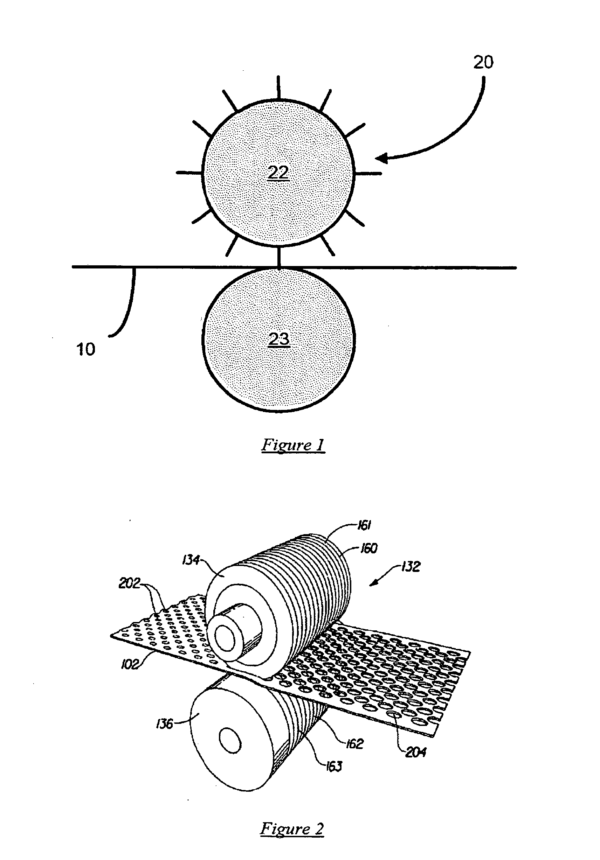

Turing briefly to Figure 1, an embodiment is seen in the pin perforation stage. Web 10 passes through thermo-mechanical contact process consisting of pin perforation rollers seen generally at 20. Roller 22 contains pins as are desired, which perforate web 10, as web 10 moves past the roller.

Figure 2 shows a softening embodiment. As can be seen perforated web 102 (with perforations shown at 202) moves past ring rollers shown generally at 132. Rollers 134 and 136, with rings 160 and 161 and interring spacing at 162 and 163, provide the stress required to soften apertures such as those seen at 204.

It should be noted as well that embodiments may provide for varying sizes, shapes, etc. in whole or part, of apertures through varying parameters in various embodiments. Embodiments may also provide for varying degrees of softening, through varying various parameters in the process. For example, in fiber reorientation or ring rolling embodiment, rings may be of various geometries, spacing and the like.

A nonwoven formed in accordance with the embodiments may be used as desired. For example, various embodiments may be used, in whole or part, in various types of articles, such as, for example, a topsheet or other parts of absorbent articles, including adult, child or infant incontinence products (for example, diapers, briefs, etc.,) female hygiene products (for example, female menstrual products, sanitary napkins, pantiliners, etc.,) wraps, including sterile and nonsterile (e.g. bandages with and without absorbent sections,) as well as other disposable and/or multiple use products; e.g., articles proximate to a human or animal body, such as for example, garments, apparel, including undergarments, under- and outer-wear, for example, undershirts, bras, briefs, panties, etc., bathing suits, coveralls, socks, head coverings and bands, hats, mitten and glove liners, medical clothing, etc.; bed sheets; medical drapes; packaging materials; protective covers; household; office; medical or construction materials; wrapping materials; etc. therapeutic devices and wraps.

Further treatment may also be desired, such as supplementary bonding processes, embossing processes, perforation processes, mechanical activation processes, combinations of these, etc.

Embodiments may also be combined with a component or components to form laminate or composite materials, finished and semi-finished, etc. which, if desired, may be further treated through embossing, perforating etc. sewing, bonding, printing, cutting, shaping, gluing, fluting, sterilizing, etc. combination with or independently of other processes as are known in the art.

Although the present invention has been described with respect to various specific embodiments, various modifications will be apparent from the present disclosure and are intended to be within the scope of the following claim.

## Claims

1. A method for softening an apertured non woven web (102), comprising;
- providing a thermoplastic non-woven web apertured through thermo-mechanical contact perforation; and,
- softening said non woven web through the re-orientation of the fibers from planar to three dimensional orientation by incrementally stretching in the transverse direction through ring rolling while the hole geometry remains as it was when perforated and while decreasing the basis weight of the web by an amount less than 25%.

## Patentansprüche

1. Verfahren zum Weichmachen einer mit Öffnungen versehenen nicht gewebten Bahn (102), das umfasst:
Bereitstellen einer thermoplastischen nicht gewebten Bahn, die durch thermo-mechanische Kontaktperforation mit Öffnungen versehen wurde; und
Weichmachen der nicht gewebten Bahn durch Neuausrichten der Fasern von einer zweidimensionalen in eine dreidimensionale Ausrichtung durch inkrementelles Dehnen in Querrichtung durch Ringwalzen, während die Lochgeometrie so bleibt, wie sie beim Perforieren war, und während das Grundgewicht der Bahn um weniger als 25% verringert wird.

## Revendications

1. Procédé d'assouplissement d'une toile non tissée ajourée (102), comprenant :
- la fourniture d'une toile non tissée thermoplastique ajourée par le biais d'une perforation par contact thermomécanique ; et
- l'assouplissement de ladite toile non tissée par le biais de la réorientation des fibres d'une orientation plane à une orientation tridimensionnelle par étirement incrémentiel dans le sens transversal par laminage circulaire en maintenant la géométrie des trous identique à ce qu'elle était lors de la perforation et en réduisant le poids de base de la toile d'une quantité inférieure à 25%.
